# EUROPÄISCHE PATENTSCHRIFT

(11) **EP 3 793 857 B1**
(45) Veröffentlichungstag und Bekanntmachung des Hinweises auf die Patenterteilung: **12.04.2023**
(21) Anmeldenummer: 19724415.5
(22) Anmeldetag: 13.05.2019
(51) Int. Cl.: B60L 7/26, B60L 7/18, B60L 3/10

(54) **SYSTEM MIT EINEM STEUERGERÄT FÜR EIN NUTZFAHRZEUG SOWIE EIN VERFAHREN ZUM BETREIBEN EINES NUTZFAHRZEUGS MIT DEM SYSTEM**
SYSTEM COMPRISING A CONTROL DEVICE FOR A UTILITY VEHICLE, AS WELL AS A METHOD FOR OPERATING A UTILITY VEHICLE WITH THE SYSTEM
SYSTÈME COMPRENANT UN APPAREIL DE COMMANDE POUR UN VÉHICULE UTILITAIRE AINSI QUE PROCÉDÉ SERVANT À FAIRE FONCTIONNER UN VÉHICULE UTILITAIRE À L'AIDE DU SYSTÈME

(30) Priorität: 15.05.2018 DE 102018111679
(43) Veröffentlichungstag der Anmeldung: 24.03.2021
(73) Patentinhaber: ZF CV Systems Europe BV, 1170 Brussels (BE)
(72) Erfinder: HESEDING, Johannes, 30169 Hannover (DE); SCHÜNEMANN, Gerd, 30880 Laatzen (DE)
(74) Vertreter: Ohlendorf, Henrike
(86) Internationale Anmeldenummer: PCT/EP2019/062123
(87) Internationale Veröffentlichungsnummer: WO 2019/219554

(56) Entgegenhaltungen:
- EP-A1- 2 612 796
- EP-A1- 2 876 007
- WO-A1-2015/106260
- DE-A1- 19 842 472
- DE-A1-102014 220 668

## Beschreibung

Die Erfindung betrifft den Bereich von Nutzfahrzeugen, insbesondere elektrisch oder hybridangetriebener Nutzfahrzeuge, wie Lastkraftwagen, die einerseits einen elektrischen Antrieb und andererseits einen Antrieb durch einen Verbrennungsmotor umfassen. Historisch gesehen sind derartige Nutzfahrzeuge, die seit langem mit einem Verbrennungsmotor als Antrieb bekannt sind, in der Regel zu Hybridfahrzeugen weiterentwickelt worden. Das heißt, Nutzfahrzeugen mit Verbrennungsfahrzeugen wurde ein elektrischer Antrieb in die bestehende Struktur hinzugefügt. In der Regel hat somit keine komplette Neuentwicklung zum Bereitstellen eines hybriden Nutzfahrzeugs stattgefunden. Die Regelung des elektrischen Antriebs wurde demnach an die vorhandene Regelstruktur angepasst.

Bei den bekannten Nutzfahrzeugen, die hybridangetrieben sind, ist daher üblicherweise ein elektrischer Antrieb vorgesehen, der primär eingesetzt wird, um eine positive Beschleunigung, die durch den Verbrennungsmotor erzeugt wird, zu unterstützen. Bei rein elektrisch angetriebenen Fahrzeugen dient der elektrische Antrieb primär zum Erzeugen der positiven Beschleunigung allein. Hierzu weisen derartige Nutzfahrzeuge üblicherweise ein Fahrzeugsteuergerät (VCU) auf. Im Beschleunigungsfall wird, im Falle eines hybridangetriebenen Fahrzeugs, vom Fahrzeugsteuergerät ein Beschleunigungswunsch, der beispielsweise durch eine Gaspedalstellung von einem Fahrer vorgegeben wird, an einen Verbrennungsmotor übergeben, der in Zusammenspiel mit einem Getriebe ein Drehmoment der Antriebsräder bereitstellt. Bei Bedarf schaltet das Fahrzeugsteuergerät den elektrischen Antrieb zur Unterstützung der Drehmomentbereitstellung hinzu. Vom Fahrzeugsteuergerät wird außerdem ein elektronisch geregeltes Bremssystem (EBS) des Fahrzeugs angesteuert, um einen negativen Beschleunigungswunsch, also ein gewünschtes Bremsen, zu empfangen und dieses über eine Reibbremse umzusetzen.

Hierbei ist auch bekannt, dass das Fahrzeugsteuergerät im Falle eines vorhandenen elektrischen Antriebs zur Unterstützung bei einer Bremsung auch einem elektrischen Antrieb den Bremswunsch signalisiert, um eine Bremsung durch einen elektromagnetischen Bremsbetrieb des elektrischen Antriebs zu unterstützen. Hierbei kann zudem elektrische Energie bei einem Bremsmanöver, das mit dem elektrischen Antrieb durchgeführt wird, zurückgewonnen werden.

Gemäß dem Stand der Technik werden schnelle Beschleunigungs- oder Drehmomentänderungen, die beispielsweise im Falle einer Schlupf- oder Stabilitätsregelung nötig sind, vom elektronisch geregelten Bremssystem selbst ausgeführt und hierbei nur die Reibbremsen verwendet. Ein Einbeziehen des elektrischen Antriebs ist aufgrund einer hierfür benötigten komplexen Kommunikation zwischen den einzelnen Steuergeräten bislang nicht möglich, aber wünschenswert.

DE 10 2014 220 668 A1 offenbart ein System zur Erzeugung von Nutzbremsleistung während eines Antiblockierbremssystemsteuerereignisses. Das System weist eine Steuerung auf, die dazu konfiguriert ist, ein angefordertes Antiblockierradbremsmoment in verschiedene Frequenzkomponenten zu filgern und den Motor dazu anzusteuern, ein Nutzbremsmoment bereitzustellen, um einer der Frequenzkomponenten während des Antiblockierereignisses zu entsprechen. Es wird eine Reibungsbremse oder ein Motor angesteuert, wobei sowohl die Reibungsbremse als auch der Motor an ein Rad gekoppelt sind. Dazu offenbart DE 10 2014 220 668 A1 eine Antriebsstrangsteuereinheit und eine Bremssteuereinheit, wobei die Bremssteuereinheit ein ABS-Modul enthält.

Aufgabe der vorliegenden Erfindung ist es demnach, eine Möglichkeit zu finden, auch einen elektrischen Antrieb bei der hochdynamischen Stellung positiven und negativen Drehmoments zur Schlupf- und Stabilitätsregelung zu verwenden, um auch die hohe Drehmomentdynamik von elektrischen Antrieben zur verbesserten Schlupf- und Stabilitätsregelung nutzen zu können.

Hierzu betrifft die Erfindung ein System mit einem Steuergerät für ein Nutzfahrzeug, das einen Datenanschluss, der auch Dateneingang genannt werden kann, und eine Steuerung umfasst. Das Nutzfahrzeug ist beispielsweise ein Lastkraftwagen. Der Dateneingang dient zum Empfangen eines Beschleunigungsanforderungssignals. Das Beschleunigungsanforderungssignal ist beispielsweise positiv oder negativ, weist also vorzugsweise positive oder negative Drehmomente auf. Positive Drehmomente beschreiben vorzugsweise ein Antreiben eines Fahrzeugs und negative Drehmomente eine Verzögerung, nämlich ein Bremsen. Das Beschleunigungsanforderungssignal gibt eine Anforderung einer Beschleunigungsänderung mindestens einer angetriebenen Achse des Nutzfahrzeugs an. Das Beschleunigungsanforderungssignal wird beispielsweise basierend auf einer von einem Fahrer veränderten Pedalstellung erzeugt und dem Steuergerät über den Dateneingang zugeführt.

Das Steuergerät dient erfindungsgemäß zum Erzeugen von Antriebsansteuersignalen für einen elektrischen Antrieb der angetriebenen Achse und gleichzeitig zum Erzeugen von Bremsansteuersignalen für eine Reibbremsanlage der angetriebenen Achse. Hierbei werden die Antriebsansteuersignale und die Bremsansteuersignale in Abhängigkeit des Beschleunigungsanforderungssignals erzeugt.

Demnach ist ein System mit einem einzelnen, einzigen Steuergerät vorgesehen, das basierend auf einer Anforderung einer Beschleunigungsänderung einerseits einen elektrischen Antrieb einer angetriebenen Achse und andererseits gleichzeitig die Ansteuerung der Reibbremsanlage der angetriebenen Achse vornimmt. Das Steuergerät des Systems stellt somit eine Vereinigung mehrerer Steuergeräte dar, sodass eine komplexe und zeitkritische Kommunikation zwischen den Steuergeräten für hochdynamische Beschleunigungsänderungen oder Drehmomentänderungen nicht mehr nötig ist. Ein einzelnes Steuergerät des erfindungsgemäßen Systems ist somit in der Lage, unabhängig von einer Kommunikation mit weiteren System eine Koordination zwischen der Ansteuerung eines elektrischen Antriebs sowie der Reibbremsanlage durchzuführen.

Gemäß einer ersten Ausführungsform der Erfindung weist das Steuergerät ein Drehmomentaufteilungsmodul auf, um mindestens einen Drehmomentsollwert als Antriebsansteuerungssignal für den elektrischen Antrieb und mindestens einen Drehmomentsollwert als Bremsansteuerungssignal für die Reibbremsanlage jeweils basierend auf einem Beschleunigungsanforderungssignal zu erzeugen. Demnach ist das System eingerichtet, ein Beschleunigungsanforderungssignal, das zum Beispiel negativ ist, individuell in eine Bremsung mit dem elektrischen Antrieb durch Vorgeben eines Drehmomentsollwerts als Antriebsansteuerungssignal auszugeben. Im Falle, dass der als elektromagnetische Bremse betriebene elektrische Antrieb nicht ausreichend ist, um eine gewünschte negative Beschleunigung auszuführen, wird von der Steuerung die Reibbremsanlage durch Vorgeben eines Drehmomentsollwerts als Bremsansteuerungssignal hinzugezogen.

Gemäß einer weiteren Ausführungsform ist das Steuergerät eingerichtet, ein Schlupfsignal zu empfangen oder zu erzeugen. Das Schlupfsignal umfasst hierbei einen Schlupf eines oder mehrerer Antriebsräder der mindestens einen Antriebsachse. Ist das Steuergerät gemäß einer besonderen Ausführungsform eingerichtet, das Schlupfsignal zu erzeugen, so wird dies beispielsweise aus der Differenz der mit vorhandenen Sensoren erfassten Drehzahl der Antriebsräder und einer Fahrzeuggeschwindigkeit, die beispielsweise durch ein Fahrzeugsteuergerät vorgebbar ist, bestimmt.

Außerdem ist das Steuergerät eingerichtet, Antriebsansteuersignale und Bremsansteuersignale in Abhängigkeit des Beschleunigungsanforderungssignals einerseits und in Abhängigkeit des Schlupfsignals andererseits zu erzeugen. Durch die integrierte Erzeugung der Antriebsansteuersignale und der Bremsansteuersignale kann somit auch auf einen detektierten Schlupf der Antriebsachse beispielsweise zur Schlupf- und Stabilitätsregelung des Fahrzeugs unter Hinzuziehung des elektrischen Antriebs reagiert werden. Der elektrische Antrieb ist somit auch im Falle von Schlupf- oder Stabilitätssteuerungsmanövern für eine Energierückgewinnung nutzbar. Außerdem können im Falle, dass der elektrische Antrieb mehrere elektrische Motoren umfasst, radindividuelle Eingriffe zur Verbesserung der Fahrzeugstabilität vorgenommen werden.

Gemäß einer weiteren Ausführungsform umfasst das Steuergerät einen Anschluss für ein Bussystem. Das Bussystem ist vorzugsweise ein CAN-Bus. Der Anschluss dient, um das Beschleunigungsanforderungssignal und/oder das Schlupfsignal zu empfangen. Da ein Beschleunigungsanforderungssignal und/oder ein Schlupfsignal üblicherweise von einem Fahrzeugsteuergerät (VCU) bereitgestellt und/oder ausgesendet wird, dient eine Busverbindung, um das Beschleunigungsanforderungssignal und/oder das Schlupfsignal vorzugsweise von dem Fahrzeugsteuergerät zu empfangen. Zur Schlupf- oder Stabilitätsregelung selbst ist jedoch eine Kommunikation mit einem Fahrzeugsteuergerät nicht mehr nötig. Das Fahrzeugsteuergerät dient somit lediglich, eine Anforderung einer Beschleunigungsänderung, die zum Beispiel negativ ist, an das Steuergerät des Systems zu übertragen. Tritt dann ein Schlupf auf, so kann das Steuergerät diesem selbständig begegnen oder diesen ausgleichen, ohne erneut mit dem Fahrzeugsteuergerät zu kommunizieren. Das Auftreten eines Schlupfs wird vorzugsweise erkannt, wenn ein Schlupfwert eines Rades, der durch Bestimmen der Drehzahl des Rades und Vergleichen der Drehzahl mit einer Fahrzeuggeschwindigkeit bestimmt wird, mindestens einen vordefinierten Schwellenwert überschreitet. Somit stellt eine Kommunikation über das Bussystem eine einfache und ausreichende Kommunikationsmöglichkeit zwischen dem Steuergerät des Systems und dem Fahrzeugsteuergerät dar.

Gemäß einer weiteren Ausführungsform ist das Steuergerät eingerichtet, zusätzlich weitere Bremsansteuersignale für eine Reibbremsanlage mindestens einer nichtangetriebenen Achse des Nutzfahrzeugs in Abhängigkeit des Beschleunigungsanforderungssignals bereitzustellen. Eine nichtangetriebene Achse des Nutzfahrzeuges ist vorzugsweise eine antriebslose Achse, die also keinen Antrieb aufweist. Auf ein zusätzliches elektronisches Bremssystem für weitere, nicht mit einem elektrischen Antrieb ausgestattete Achsen eines Nutzfahrzeugs kann somit verzichtet werden, sodass kein separates Bremssteuergerät für die weiteren nichtangetriebenen Achsen vorgesehen werden muss. Hierdurch wird die Anzahl benötigter elektronischer Komponenten ermöglicht und ein weiter verringerter Aufwand für Kommunikation und Abstimmung der an der Fahrzeugbewegung beteiligten Steuergeräte erreicht.

Gemäß einer weiteren Ausführungsform ist das Steuergerät eingerichtet, ein Beschleunigungsanforderungssignal, das eine negative Beschleunigungsanforderung, nämlich eine Bremsanforderung, umfasst, von einem Fahrzeugsteuergerät direkt oder über ein Bremssteuergerät, das insbesondere für eine Reibbremsanlage einer nichtangetriebenen Achse des Fahrzeugs vorgesehen ist, zu empfangen.

Sind demnach entgegen der vorhergehenden Ausführungsform ein oder mehrere Bremssteuergeräte (EBS) im Fahrzeug vorgesehen, die eine Schlupf- oder Stabilitätsregelung nichtangetriebener Achsen ausführen, so kann durch Empfangen eines Beschleunigungsanforderungssignals von diesen Bremssteuergeräten die Reibbremsanlage sowie der elektrische Antrieb einer angetriebenen Achse des Fahrzeugs zur Unterstützung der angeforderten Bremsanforderung dienen. Eine Kommunikation zwischen dem oder den Bremssteuergeräten und der erfindungsgemäßen Steuerung erfolgt beispielsweise über ein Bussystem, wie einen CAN-Bus.

Gemäß einer weiteren Ausführungsform ist das Steuergerät eingerichtet, ein Beschleunigungsanforderungssignal, das eine positive Beschleunigungsanforderung, nämlich eine Geschwindigkeitserhöhungsanforderung umfasst, von einem Fahrzeugsteuergerät direkt zu empfangen.

Gemäß einer weiteren Ausführungsform weist das System ein Bremssteuergerät für die Reibbremsanlage einer nichtangetriebenen Achse auf. Das Bremssteuergerät ist eingerichtet, ein Beschleunigungsanforderungssignal mit einer Aufforderung einer negativen Beschleunigungsänderung, nämlich einer Bremsanforderung, von einem Fahrzeugsteuergerät zu empfangen, abzuändern und daraufhin als abgeändertes Beschleunigungsanforderungssignal an das Steuergerät zu senden. Somit ist das Steuergerät dann eingerichtet, zunächst Antriebsansteuersignale mit einem negativen Drehmoment aus dem abgeänderten Beschleunigungsanforderungssignal zu erzeugen. Das System ist somit eingerichtet, zunächst ein negatives Drehmoment mit dem elektrischen Antrieb anzufordern und im Falle, dass das negative Drehmoment der elektrischen Motoren nicht ausreichend ist, um die negative Beschleunigungsänderung zu erfüllen, mit dem Bremssteuergerät ein Bremsansteuersignal für die Reibbremsanlage zu erzeugen.

Hierbei wird zunächst berücksichtigt, dass bei einem Bremsen eine maximale Energierückgewinnung mit einem elektrischen Antrieb vorgenommen wird und erst nach Erreichen einer Grenze für eine derartige Bremsmöglichkeit auf die Reibbremsen zurückgegriffen wird.

Gemäß einer weiteren Ausführungsform ist das Steuergerät eingerichtet, individuelle Antriebsansteuersignale für mehrere elektrische Motoren eines elektrischen Antriebs individuell aus dem Beschleunigungsanforderungssignal, insbesondere auch unter Berücksichtigung des Schlupfsignals und/oder weiterer Sensorwerte, die beispielsweise eine Kurvenfahrt anzeigen, zu erzeugen. Demnach können beispielsweise zur Stabilitätsregelung eines Fahrzeugs elektrische Motoren des elektrischen Antriebs auf unterschiedlichen Seiten des Fahrzeugs mit unterschiedlichen Drehmomenten, die durch die unterschiedlichen individuellen Antriebsansteuersignale dargestellt werden, beaufschlagt werden. Eine Verbesserung und Erhöhung der Sicherheit kann hierdurch erzielt werden.

Gemäß einer weiteren Ausführungsform umfasst das Steuergerät mehrere Treiber, insbesondere Gate-Treiber, wie beispielsweise IGBT-Gate-Treiber, um mit den Bremsansteuersignalen mittels der Treiber Ventile oder Magnetventile der Reibbremsanlage anzusteuern. Die Treiber bilden zusammen vorzugsweise eine Ventilansteuereinheit. Außerdem umfasst das System mehrere Treiber, insbesondere Gate-Treiber, wie beispielsweise IGBT-Gate-Treiber, die zum Ansteuern mindestens einer Endstufe eines Wechselrichters des elektrischen Antriebs mit dem Antriebsansteuersignal dienen. Die Treiber zum Ansteuern der Endstufe bilden zusammen vorzugsweise eine Wechselrichteransteuereinheit zur Ansteuerung einer Endstufe eines Wechselrichters. Die Treiber für die Ansteuerung der Ventile oder Magnetventile sowie für die Ansteuerung der Endstufe des Wechselrichters sind vorzugsweise identisch ausgeführt.

Eine Leistungsstufe des Steuergeräts, umfassend zum Beispiel eine Ventilansteuereinheit und eine Wechselrichteransteuereinheit, ist somit kostengünstiger und mit geringem Aufwand herstellbar. Insbesondere ist durch die Verwendung identischer Bauteile ein Systemdesign bzw. ein Komponentendesign deutlich vereinfacht.

Das Steuergerät umfasst mindestens eine Endstufe für mindestens einen Wechselrichter, insbesondere mindestens einen IGBT-Wechselrichter. Die Endstufe ist durch Antriebsansteuersignale über die Wechselrichteransteuereinheit ansteuerbar, um Energie eines Energiespeichers zur Versorgung mindestens eines elektrischen Motors des elektrischen Antriebs bereitzustellen. Durch weitere Integration auch der Endstufe in das Steuergerät wird der Integrationsaufwand für das vorliegende System weiter reduziert und eine Kommunikation mit externen Komponenten weiter verringert.

Gemäß einer weiteren Ausführungsform umfasst das Steuergerät mindestens ein Ventil, bevorzugt mindestens ein Magnetventil. Das Ventil ist beispielsweise ein Antiblockiersystem-Ventil, nämlich ein ABS-Ventil. Das mindestens eine Ventil ist durch das Bremsansteuersignal, insbesondere mittels Treiber des Steuergeräts, ansteuerbar. Hierdurch wird die Integration weiter erhöht und eine Kommunikation noch weiter verringert.

Gemäß einer weiteren Ausführungsform ist das Steuergerät eingerichtet, im Falle eines Beschleunigungsanforderungssignals, das eine positive Beschleunigungsänderung anzeigt, und bei Detektion eines Schlupfwertes oberhalb dem vordefinierten Schwellenwert den Drehmomentsollwert des Antriebsansteuersignals zu reduzieren und ein Bremsansteuersignal mit einer Bremsanforderung für eine Reibbremsanlage der angetriebenen Achse zu erzeugen. Eine Antriebsschlupfregulierung ist somit möglich.

Gemäß einer weiteren Ausführungsform umfasst das System eine in das Steuergerät integrierte Schlupfregelschaltung, wie ein Antiblockiersystem (ABS) oder eine Antriebsschlupfregelung (ASR), und/oder eine integrierte Stabilitätsregelschaltung, wie ein elektronisches Stabilitätsprogramm (ESP, ESC), insbesondere für die angetriebene Achse.

Gemäß einer weiteren Ausführungsform ist das Steuergerät eingerichtet, im Falle eines negativen Drehmomentsollwerts eines Antriebsansteuersignals, das sich vorzugsweise aus einem Beschleunigungsanforderungssignal, das eine negative Beschleunigungsänderung anzeigt, ergibt, den elektrischen Antrieb in einen Generatorbetrieb zu schalten. Hierdurch ist kinetische Energie, die über die Antriebsachse bereitstellbar ist in elektrische Energie wandelbar, die dann im Energiespeicher speicherbar ist.

Gemäß einer weiteren Ausführungsform ist das Steuergerät eingerichtet, ein Betriebsbremsanforderungssignal zu empfangen, das vom Fahrzeugsteuergerät erzeugt wird, und hierdurch die Reibbremsanlage anzusteuern. Eine Betriebsbremsanforderung, die den Wunsch eines Fahrers anzeigt, die Betriebsbremse zu aktivieren, wird somit vom Steuergerät umgesetzt.

Gemäß einer weiteren Ausführungsform ist das Steuergerät eingerichtet, eine Motorbremse und/oder einen Retarder eines Nutzfahrzeugs anzusteuern. Eine weitere Integration von Funktionen in das Steuergerät ist hierdurch realisiert.

Gemäß einer weiteren Ausführungsform umfasst die Erfindung ein Nutzfahrzeug mit einem Fahrzeugsteuergerät. Gemäß der zuletzt genannten Ausführungsform weist das Nutzfahrzeug mindestens eine angetriebene Achse und mindestens eine nichtangetriebene Achse auf.

Ferner umfasst die Erfindung ein Verfahren zum Betreiben eines Systems nach einer der vorgenannten Ausführungsformen.

Weitere Ausführungsformen ergeben sich anhand der in den Figuren näher erläuterten Ausführungsbeispiele. Hierbei zeigen:
- Fig. 1: ein Nutzfahrzeug und
- Fig. 2: ein Ausführungsbeispiel des Verfahrens.

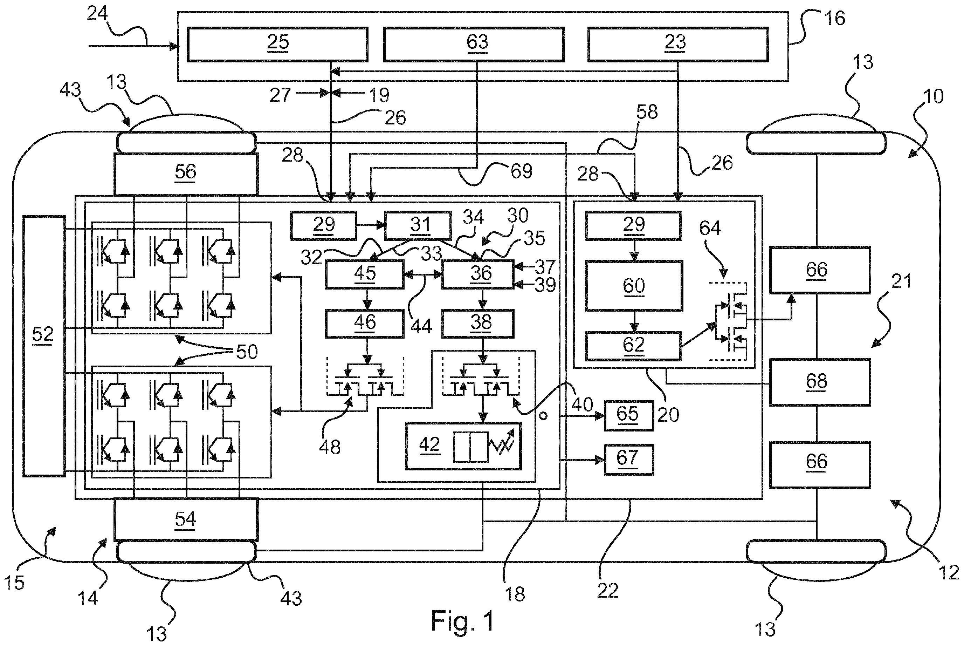

Fig. 1 zeigt ein Nutzfahrzeug 10 mit einer nichtangetriebenen 12 und einer angetriebenen Achse 14. Die nichtangetriebene Achse 12 ist antriebslos und hier eine Vorderachse. Die angetriebene Achse 14 ist angetrieben und hier eine Hinterachse. Beide Achsen weisen Räder 13 auf. Hier ist, wie später erläutert wird, lediglich ein elektrischer Antrieb 15 dargestellt, wobei das Fahrzeug 10 zusätzlich einen Antrieb durch einen Verbrennungsmotor umfassen kann.

Das Fahrzeug 10 umfasst ein Fahrzeugsteuergerät 16, das einerseits mit einem Steuergerät 18 und andererseits mit einem Bremssteuergerät 20 Daten austauschen kann. Das Steuergerät 18 sowie das Bremssteuergerät 20 sind Bestandteile des hier dargestellten Ausführungsbeispiels des Systems 22.

Das Fahrzeugsteuergerät 16 stellt in Abhängigkeit einer Bedienung eines Fahrers 24 Beschleunigungsanforderungssignale 26 bereit, die dem Steuergerät 18 zugeführt werden. Hierzu erzeugt das Fahrzeugsteuergerät 16 geforderte positive Beschleunigungsänderungen 25 und negative Beschleunigungsänderungen 23 als Beschleunigungsanforderungssignal 26.

Eine Kommunikation zwischen dem Fahrzeugsteuergerät 16 und dem Steuergerät 18 erfolgt zum Übertragen des Beschleunigungsanforderungssignals 26 beispielsweise über ein Bussystem 27. Entsprechend umfasst das Steuergerät 18 einen Datenanschluss 28. Der Datenanschluss 28 ist vorzugsweise ein Anschluss für einen CAN-Bus 19 und umfasst entsprechend auch ein CAN-Interface 29. Außerdem umfasst das Steuergerät 18 ein Drehmomentaufteilungsmodul 31, das ein Antriebsansteuersignal 32 zum Ansteuern eines elektrischen Antriebs 15 und zum Ansteuern von Bremsansteuersignalen 34 für eine Reibbremsanlage 43 erzeugt. Die Antriebsansteuersignale 32 umfassen beispielsweise einen Drehmomentsollwert 33 und die Bremsansteuersignale 34 beispielsweise einen Drehmomentsollwert 35.

Die Bremsansteuersignale 34 werden zunächst einer Schlupfregelung 36 für die angetriebene Achse zugeführt. Der Schlupfregelung 36 werden außerdem Schlupfwerte 37, die den Schlupf jeweils jedes der Räder 13 anzeigen, und mindestens ein vordefinierter Schwellenwert 39 zugeführt. In der Schlupfregelung 36 wird ein vorhandener Schlupf eines Rades 13 erkannt, wenn der Schlupfwert 37 des Rades 13 oberhalb dem Schwellenwert 39 liegt. In Abhängigkeit eines vorhanden oder eines nicht vorhandenen Schlupfes werden die Antriebsansteuersignale 32 und das Bremsansteuersignal 34 angepasst. Über eine Treibersteuerung 38 wird ein Treiber 40 in Abhängigkeit des Bremsansteuersignals 34 angesteuert, der ein Ventil 42 einer Reibbremsanlage 43 ansteuert. In Abhängigkeit der Antriebsansteuersignale 32 sowie von Schlupfsignalen 44, die von der Schlupfregelung 36 ebenfalls zusammen mit den Antriebsansteuersignalen 32 einer Motorsteuerung 45 zugeführt werden, werden mittels der Motorsteuerung 45 Signale erzeugt, die einer weiteren Treibersteuerung 46 zugeführt werden, um Treiber 48 anzusteuern. Hierdurch wird eine Endstufe 50 eines Wechselrichters, insbesondere eines IGBT-Wechselrichters, gesteuert, um Energie eines Energiespeichers 52 für elektrische Motoren 54, 56 des elektrischen Antriebs 15 bereitzustellen, sodass ein gewünschtes Drehmoment resultiert. Eine Endstufe 50 und Treiber 48 bilden zusammen einen Wechselrichter.

Außerdem umfasst das System 22 gemäß diesem Ausführungsbeispiel das Bremssteuergerät 20. Das Bremssteuergerät 20 dient zur Steuerung der Reibbremsanlage 21 der nichtangetriebenen Achse 12. Dem Bremssteuergerät 20 werden beispielsweise ebenfalls Beschleunigungsanforderungssignale 26 zugeführt, die vom Fahrzeugsteuergerät 16 erzeugt werden. Die Beschleunigungsanforderungssignale 26 an das Bremssteuergerät 20 werden hierbei beispielsweise an das Steuergerät 18 über einen Bus als abgeänderte Beschleunigungsanforderungssignale 58 weitergeleitet. Hierzu umfasst auch das Bremssteuergerät 20 beispielsweise einen Datenanschluss 28 und ein CAN-Interface 29.

Durch Erzeugen eigener Bremsansteuersignale im Bremssteuergerät 20 durch das empfangene Beschleunigungsanforderungssignal 26 und unter Berücksichtigung einer Schlupf- und Stabilitätsregelung 60 kann das Bremssteuergerät 20 über eine Treibersteuerung 62 und einen Treiber 64 die Reibbremsanlage 43, insbesondere Ventile 66, der nichtangetriebenen Achse 12 ansteuern. Gleichzeitig können so mithilfe des Steuergeräts 18 durch die abgeänderten Beschleunigungsanforderungssignale 58 im Steuergerät 18 Antriebsansteuersignale 32 für den elektrischen Antrieb 15 und gegebenenfalls Bremsansteuersignale 34 für die Reibbremsanlage 43 der angetriebenen Achse 14 erzeugt werden.

Das Bremssteuergerät 20 ist außerdem zur Überwachung und Regelung der Bremsstruktur mit einem Modulator 68 der nichtangetriebenen Achse 12 verbunden.

Weiterhin ist das Fahrzeugsteuergerät 16 eingerichtet, eine Betriebsbremsanforderung 63 zu erzeugen und als Betriebsbremsanforderungssignal 69 an die Steuerung 18 zu senden. Diese ist eingerichtet, beim Empfangen dieses Signals die Reibbremsanlage 43 anzusteuern, um eine Betriebsbreme zu aktivieren. Zudem sind im Nutzfahrzeug 10 eine Motorbremse 65 und ein Retarder 67 vorgesehen, die jeweils durch das Steuergerät 18 ansteuerbar sind.

Weiterhin ist das Steuergerät 18 außerdem eingerichtet, im Falle eines negativen Drehmomentsollwerts 33 eines Antriebsansteuersignals 32, den elektrischen Antrieb 15 in einen Generatorbetrieb zu schalten. Hierbei wird kinetische Energie, die über die Räder 13 auf die Antriebsachse 14 übertragen und von dieser den elektrischen Motoren 54, 56 bereitgestellt wird, in elektrische Energie mit den elektrischen Motoren 54, 56 gewandelt, um diese in dem Energiespeicher 52 zu speichern.

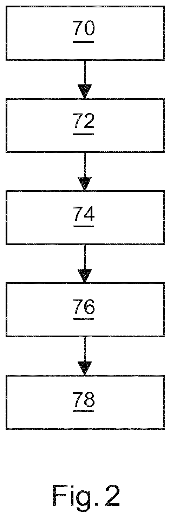

Fig. 2 zeigt exemplarisch Schritte gemäß einem Ausführungsbeispiel des Verfahrens. Hierbei wird in einem ersten Schritt 70 ein Beschleunigungsanforderungssignal 26 von einem Fahrzeugsteuergerät 16 erzeugt und an ein Steuergerät 18 in einem Schritt 72 übertragen. In dem Steuergerät 18 werden dann in einem Schritt 74 Antriebsansteuersignale 32 und Bremsansteuersignale 34 erzeugt. Mit den Antriebsansteuersignalen 32 wird im Schritt 76 mindestens ein Treiber 48 eines elektrischen Antriebs 15 und im Schritt 78 mit dem Bremsansteuersignal 34 ein Treiber einer Reibbremsanlage 43 angesteuert.

### Bezugszeichenliste (Bestandteil der Beschreibung)

- 10: Nutzfahrzeug
- 12: nichtangetriebene Achse
- 13: Räder
- 14: angetriebene Achse
- 15: elektrischer Antrieb
- 16: Fahrzeugsteuergerät
- 18: Steuergerät
- 19: CAN-Bus
- 20: Bremssteuergerät
- 21: Reibbremsanlage der nichtangetriebenen Achse
- 22: System
- 23: negative Beschleunigungsänderungen
- 24: Bedienung eines Fahrers
- 25: positive Beschleunigungsänderungen
- 26: Beschleunigungsanforderungssignale
- 27: Bussystem
- 28: Datenanschluss
- 29: CAN-Interface
- 30: Steuerung
- 31: Drehmomentaufteilungsmodul
- 32: Antriebsansteuersignale
- 33: Drehmomentsollwert
- 34: Bremsansteuersignale
- 35: Drehmomentsollwert
- 36: Schlupfregelung
- 37: Schlupfwerte
- 38: Treibersteuerung
- 39: vordefinierter Schwellenwert
- 40: Treiber
- 42: Ventil
- 43: Reibbremsanlage
- 44: Schlupfsignale
- 45: Motorsteuerung
- 46: Treibersteuerung
- 48: Treiber
- 50: Endstufe eines Wechselrichters
- 52: Energiespeicher
- 54, 56: elektrische Motoren
- 58: abgeänderte Beschleunigungsanforderungssignale
- 60: Schlupf- und Stabilitätsregelung
- 62: Treibersteuerung
- 63: Betriebsbremsanforderung
- 64: Treiber
- 65: Motorbremse
- 66: Ventile
- 67: Retarder
- 68: Modulator
- 69: Betriebsbremsanforderungssignal
- 70-78: Schritte des Verfahrens

## Patentansprüche

1. System (22) mit einem einzigen Steuergerät (18) für ein Nutzfahrzeug (10), wobei das Steuergerät (18) umfasst:
- einen Datenanschluss (28) zum Empfangen eines Beschleunigungsanforderungssignals (26), das eine Anforderung einer Beschleunigungsänderung (23, 25) mindestens einer angetriebenen Achse (14) des Nutzfahrzeugs (10) anzeigt,
- eine Steuerung (30) zum Erzeugen von
a) Antriebsansteuersignalen (32) für einen elektrischen Antrieb (15) der angetriebenen Achse (14) in Abhängigkeit des Beschleunigungsanforderungssignals (26) und
b) Bremsansteuersignalen (34) für eine Reibbremsanlage (43) der angetriebenen Achse (14) in Abhängigkeit des Beschleunigungsanforderungssignals (26) und
- **gekennzeichnet dadurch, dass** das Steuergerät außerdem mindestens eine Endstufe (50) eines Wechselrichters umfasst, wobei die Endstufe (50) durch die Antriebsansteuersignale (32) ansteuerbar ist, um Energie eines Energiespeichers (52) zur Versorgung mindestens eines elektrischen Motors (54, 56) des elektrischen Antriebs (15) bereitzustellen.

2. System (22) nach Anspruch 1, wobei das Steuergerät (18) ein Drehmomentaufteilungsmodul (31) aufweist, um mindestens einen Drehmomentsollwert (33) als Antriebsansteuersignal (32) für den elektrischen Antrieb (15) und mindestens einen Drehmomentsollwert (35) als Bremsansteuerungssignal (34) für die Reibbremsanlage (43) zu erzeugen.

3. System (22) nach Anspruch 1 oder 2, wobei das Steuergerät (18) eingerichtet ist, ein Schlupfsignal (44) zu empfangen oder zu erzeugen, das einen Schlupfwert (37) eines oder mehrerer Räder (13) der mindestens einen Antriebsachse (14), der oberhalb einem vordefinierten Schwellenwert (39) liegt, anzeigt, und das Steuergerät (18) eingerichtet ist, Antriebsansteuersignale (32) und Bremsansteuersignale (34) in Abhängigkeit des Beschleunigungsanforderungssignals (26) und des Schlupfsignals (44) zu erzeugen oder abzuändern.

4. System (22) nach einem der vorhergehenden Ansprüche, wobei das Steuergerät (18) einen Anschluss (28) für ein Bussystem (27), insbesondere einen CAN-Bus (19), aufweist, um das Beschleunigungsanforderungssignal (26) oder ein abgeändertes Beschleunigungsanforderungssignal (58) zu empfangen.

5. System (22) nach einem der vorhergehenden Ansprüche, wobei das Steuergerät (18) eingerichtet ist, weitere Bremsansteuersignale (34) für eine Reibbremsanlage (21) mindestens einer nichtangetriebenen Achse (12) des Nutzfahrzeugs (10) in Abhängigkeit des Beschleunigungsanforderungssignals (26) bereitzustellen.

6. System (22) nach einem der vorhergehenden Ansprüche, wobei das Steuergerät (18) eingerichtet ist, ein Beschleunigungsanforderungssignal (26), das eine negative Beschleunigungsänderung (23) anfordert von einem Fahrzeugsteuergerät (16) direkt oder indirekt über ein Bremssteuergerät (20), insbesondere für eine Reibbremsanlage (21) einer nichtangetriebenen Achse (12) des Fahrzeugs (10), zu empfangen.

7. System (22) nach einem der vorhergehenden Ansprüche, wobei das Steuergerät (18) eingerichtet ist, ein Beschleunigungsanforderungssignal (26), das eine positive Beschleunigungsänderung (25) umfasst, von einem Fahrzeugsteuergerät (16) direkt zu empfangen.

8. System (22) nach einem der vorhergehenden Ansprüche, wobei das System (22) ein Bremssteuergerät (20) für die Reibbremsanlage (21) einer nichtangetriebenen Achse (12) umfasst, wobei das Bremssteuergerät (20) eingerichtet ist, ein Beschleunigungsanforderungssignal (26) mit einer Anforderung einer negativen Beschleunigungsänderung (23) von einem Fahrzeugsteuergerät (16) zu empfangen, abzuändern und als abgeändertes Beschleunigungsanforderungssignal (58) an das Steuergerät (18) zu senden, wobei das Steuergerät (18) in diesem Fall eingerichtet ist, Antriebsansteuersignale (32) mit einem negativen Drehmomentsollwert (33) in Abhängigkeit des abgeänderten Beschleunigungsanforderungssignals (58) zu erzeugen.

9. System (22) nach einem der vorhergehenden Ansprüche, wobei das Steuergerät (18) eingerichtet ist, mehrere Antriebsansteuersignale (32) für mehrere elektrische Motoren (54, 56) eines elektrischen Antriebs (15) zu erzeugen.

10. System (22) nach einem der vorhergehenden Ansprüche, wobei das System (22) mehrere Treiber (48, 40), insbesondere Gate-Treiber (48, 40), wie IGBT-Gate-Treiber (48, 40), zum Ansteuern mindestens eines Ventils (42) der Reibbremsanlage (43) und zum Ansteuern mindestens einer Endstufe (50) eines Wechselrichters des elektrischen Antriebs (15) umfasst, wobei die Treiber (48, 40) vorzugsweise identisch sind.

11. System (22) nach einem der vorhergehenden Ansprüche, wobei das Steuergerät (18) mindestens ein Ventil (42), bevorzugt mindestens ein Magnetventil (42), besonders bevorzugt mindestens ein Antiblockiersystem(ABS)-Ventil (42), umfasst, das durch die Bremsansteuersignale (34) ansteuerbar ist.

12. System (22) nach einem der vorhergehenden Ansprüche, wobei das Steuergerät (18) eingerichtet ist, im Falle eines Beschleunigungsanforderungssignals (26), das eine Anforderung einer positiven Beschleunigungsänderung (25) umfasst, einen Drehmomentsollwert (33) des Antriebsansteuersignals (32) zu reduzieren und ein Bremsansteuersignal (34) mit einer Bremsanforderung für eine Reibbremsanlage (43) der angetriebenen Achse (14) zu erzeugen.

13. System (22) nach einem der vorhergehenden Ansprüche, wobei das Steuergerät (18) eine integrierte Schlupfregelvorrichtung (36) und/oder eine integrierte Stabilitätsregelungsvorrichtung (60), insbesondere für die angetriebene Achse (14), umfasst.

14. System (22) nach einem der vorhergehenden Ansprüche, wobei das System (22) ein Fahrzeugsteuergerät (16) umfasst.

15. System (22) nach einem der vorhergehenden Ansprüche, wobei das Steuergerät (18) eingerichtet ist, im Falle eines negativen Drehmomentsollwerts (33) eines Antriebsansteuersignals (32), den elektrischen Antrieb (15) in einen Generatorbetrieb zu schalten, um aus kinetischer Energie, die vorzugsweise über die Antriebsachse (14) bereitgestellt wird, elektrische Energie zu erzeugen und insbesondere in den Energiespeicher (52) einzuspeisen.

16. System (22) nach einem der vorhergehenden Ansprüche, wobei das Steuergerät (18) eingerichtet ist, ein Betriebsbremsanforderungssignal (69) zu empfangen, das vom Fahrzeugsteuergerät (16) erzeugt wird, um mindestens eine Reibbremsanlage (43) anzusteuern.

17. System (22) nach einem der vorhergehenden Ansprüche, wobei das Steuergerät (18) eingerichtet ist, eine Motorbremse (65) und/oder einen Retarder (67) eines Nutzfahrzeugs (10) anzusteuern.

18. Nutzfahrzeug (10) mit einem System (22) nach einem der Ansprüche 1 bis 17, wobei das Nutzfahrzeug (10) mindestens eine angetriebene Achse (14) mit mindestens einem elektrischen Antrieb (15) sowie mindestens einer Reibbremsanlage (43) und vorzugsweise eine nichtangetriebene Achse (12) umfasst.

19. Verfahren zum Betreiben eines Systems (22) nach einem der Ansprüche 1 bis 17, umfassend die Schritte:
- Übertragen (72) eines Beschleunigungsanforderungssignals (26) an ein Steuergerät (18),
- Erzeugen (74) von Antriebsansteuersignalen (32) und Bremsansteuersignalen (34) mit dem Steuergerät (18),
- Ansteuern (76) eines elektrischen Antriebs (15) mit den Antriebsansteuersignalen (32) und
- Ansteuern (78) einer Reibbremsanlage (43) mit den Bremsansteuersignalen (34).

## Claims

1. System (22) having a single control device (18) for a commercial vehicle (10), the control device (18) comprising:
- a data connection (28) for receiving an acceleration request signal (26) which indicates a request for an acceleration change (23, 25) of at least one driven axle (14) of the commercial vehicle (10),
- a controller (30) for generating
a) drive control signals (32) for an electric drive (15) of the driven axle (14) as a function of the acceleration request signal (26) and
b) brake control signals (34) for a friction brake system (43) of the driven axle (14) as a function of the acceleration request signal (26) and
- **characterized in that** the control device also comprises at least one output stage (50) of an inverter, the output stage (50) being controllable via the drive control signals (32) in order to provide energy from an energy store (52) for supplying at least one electric motor (54, 56) of the electric drive (15).

2. System (22) according to claim 1, wherein the control device (18) comprises a torque split module (31) for generating at least one torque reference value (33) as a drive control signal (32) for the electric drive (15) and at least one torque reference value (35) as a brake control signal (34) for the friction brake system (43).

3. System (22) according to claim 1 or 2, wherein the control device (18) is configured to receive or generate a slip signal (44) which indicates a slip value (37) of one or more wheels (13) of the at least one drive axle (14), which value is above a predefined threshold value (39), and the control device (18) is configured to generate or modify drive control signals (32) and brake control signals (34) as a function of the acceleration request signal (26) and the slip signal (44).

4. System (22) according to any of the preceding claims, wherein the control device (18) comprises a connection (28) for a bus system (27), in particular a CAN bus (19), for receiving the acceleration request signal (26) or a modified acceleration request signal (58).

5. System (22) according to any of the preceding claims, wherein the control device (18) is configured to provide further brake control signals (34) for a friction brake system (21) of at least one non-driven axle (12) of the commercial vehicle (10) as a function of the acceleration request signal (26).

6. System (22) according to any of the preceding claims, wherein the control device (18) is configured to receive, from a vehicle control device (16) directly or indirectly via a brake control device (20), an acceleration request signal (26) which requests a negative acceleration change (23), in particular for a friction brake system (21) of a non-driven axle (12) of the vehicle (10).

7. System (22) according to any of the preceding claims, wherein the control device (18) is configured to receive, directly from a vehicle control device (16), an acceleration request signal (26) which comprises a positive acceleration change (25).

8. System (22) according to any of the preceding claims, wherein the system (22) comprises a brake control device (20) for the friction brake system (21) of a non-driven axle (12), wherein the brake control device (20) is configured to receive, from a vehicle control device (16), an acceleration request signal (26) having a request of a negative acceleration change (23), and to modify said signal and send said signal to the control device (18) as a modified acceleration request signal (58), wherein the control device (18) is configured, in this case, to generate drive control signals (32) having a negative torque reference value (33) as a function of the modified acceleration request signal (58).

9. System (22) according to any of the preceding claims, wherein the control device (18) is configured to generate a plurality of drive control signals (32) for a plurality of electric motors (54, 56) of an electric drive (15).

10. System (22) according to any of the preceding claims, wherein the system (22) comprises a plurality of drivers (48, 40), in particular gate drivers (48, 40), such as IGBT gate drivers (48, 40), for controlling at least one valve (42) of the friction brake system (43) and for controlling at least one output stage (50) of an inverter of the electric drive (15), wherein the drivers (48, 40) are preferably identical.

11. System (22) according to any of the preceding claims, wherein the control device (18) comprises at least one valve (42), preferably at least one solenoid valve (42), particularly preferably at least one anti-lock brake system (ABS) valve (42), which can be controlled by the brake control signals (34).

12. System (22) according to any of the preceding claims, wherein the control device (18) is configured, in the event of an acceleration request signal (26) comprising a request for a positive acceleration change (25), to reduce a torque reference value (33) of the drive control signal (32) and to generate a brake control signal (34) comprising a brake request for a friction brake system (43) of the driven axle (14).

13. System (22) according to any of the preceding claims, wherein the control device (18) comprises an integrated slip controller (36) and/or an integrated stability controller (60), in particular for the driven axle (14).

14. System (22) according to any of the preceding claims, wherein the system (22) comprises a vehicle control device (16).

15. System (22) according to any of the preceding claims, wherein the control device (18) is configured, in the event of a negative torque reference value (33) of a drive control signal (32), to switch the electric drive (15) into a generator mode in order to generate electrical energy from kinetic energy, which is preferably provided via the drive axle (14), and in particular to feed said electrical energy into the energy store (52).

16. System (22) according to any of the preceding claims, wherein the control device (18) is configured to receive a service brake request signal (69), generated by the vehicle control device (16), to control at least one friction brake system (43).

17. System (22) according to any of the preceding claims, wherein the control device (18) is configured to control a motor brake (65) and/or a retarder (67) of a commercial vehicle (10).

18. Commercial vehicle (10) comprising a system (22) according to any of claims 1 to 17, wherein the commercial vehicle (10) comprises at least one driven axle (14) having at least one electric drive (15) as well as at least one friction brake system (43) and preferably a non-driven axle (12).

19. Method for operating a system (22) according to any of claims 1 to 17, comprising the steps of:
- transmitting (72) an acceleration request signal (26) to a control device (18),
- generating (74) drive control signals (32) and brake control signals (34) using the control device (18),
- controlling (76) an electric drive (15) using the drive control signals (32) and
- controlling (78) a friction brake system (43) using the brake control signals (34).

## Revendications

1. Système (22) comprenant un appareil de commande unique (18) pour un véhicule utilitaire (10), dans lequel l'appareil de commande (18) comprend :
- une connexion de données (28) pour recevoir un signal de demande d'accélération (26), qui indique une demande d'une modification d'accélération (23, 25) d'au moins un essieu moteur (14) du véhicule utilitaire (10),
- une commande (30) pour la production
a) des signaux d'activation d'entraînement (32) pour un entraînement électrique (15) de l'essieu moteur (14) en fonction du signal de demande d'accélération (26) et
b) des signaux d'activation de frein (34) pour une installation de frein à friction (43) de l'essieu moteur (14) en fonction du signal de demande d'accélération (26) et
- **caractérisé en ce que** l'appareil de commande comprend en outre au moins un étage final (50) d'un onduleur, dans lequel l'étage final (50) peut être activé par les signaux d'activation d'entraînement (32), afin de fournir de l'énergie d'un accumulateur d'énergie (52) pour l'alimentation d'au moins un moteur électrique (54, 56) de l'entraînement électrique (15).

2. Système (22) selon la revendication 1, dans lequel l'appareil de commande (18) présente un module de répartition de couple (31), afin de produire au moins une valeur de consigne de couple (33) en tant que signal d'activation d'entraînement (32) pour l'entraînement électrique (15) et au moins une valeur de consigne de couple (35) en tant que signal d'activation de frein (34) pour l'installation de frein à friction (43).

3. Système (22) selon la revendication 1 ou 2, dans lequel l'appareil de commande (18) est conçu pour recevoir ou produire un signal de patinage (44), qui indique une valeur de patinage (37) d'une ou plusieurs roues (13) de l'au moins un essieu moteur (14), qui est supérieure à une valeur seuil prédéfinie (39) et l'appareil de commande (18) est conçu pour produire ou modifier les signaux d'activation d'entraînement (32) et les signaux d'activation de frein (34) en fonction du signal de demande d'accélération (26) et du signal de patinage (44).

4. Système (22) selon l'une quelconque des revendications précédentes, dans lequel l'appareil de commande (18) présente une connexion (28) pour un système de bus (27), en particulier un bus CAN (19), afin de recevoir le signal de demande d'accélération (26) ou un signal de demande d'accélération modifié (58).

5. Système (22) selon l'une quelconque des revendications précédentes, dans lequel l'appareil de commande (18) est conçu pour fournir d'autres signaux d'activation de frein (34) pour une installation de frein à friction (21) d'au moins un essieu non moteur (12) du véhicule utilitaire (10) en fonction du signal de demande d'accélération (26).

6. Système (22) selon l'une quelconque des revendications précédentes, dans lequel l'appareil de commande (18) est conçu pour recevoir un signal de demande d'accélération (26), qui demande une modification d'accélération négative (23) d'un appareil de commande de véhicule (16) directement ou indirectement par le biais d'un appareil de commande de frein (20), en particulier pour une installation de frein à friction (21) d'un essieu non moteur (12) du véhicule (10).

7. Système (22) selon l'une quelconque des revendications précédentes, dans lequel l'appareil de commande (18) est conçu pour recevoir un signal de demande d'accélération (26), qui comprend une modification d'accélération positive (25), directement d'un appareil de commande de véhicule (16).

8. Système (22) selon l'une quelconque des revendications précédentes, dans lequel le système (22) comprend un appareil de commande de frein (20) pour l'installation de frein à friction (21) d'un essieu non moteur (12), dans lequel l'appareil de commande de frein (20) est conçu pour recevoir un signal de demande d'accélération (26) avec une demande d'une modification d'accélération négative (23) d'un appareil de commande de véhicule (16), le modifier et l'envoyer sous forme de signal de demande d'accélération modifié (58) à l'appareil de commande (18), dans lequel l'appareil de commande (18) est conçu, dans ce cas, pour produire des signaux d'activation d'entraînement (32) avec une valeur de consigne de couple négative (33) en fonction du signal de demande d'accélération modifié (58).

9. Système (22) selon l'une quelconque des revendications précédentes, dans lequel l'appareil de commande (18) est conçu pour produire plusieurs signaux d'activation d'entraînement (32) pour plusieurs moteurs électriques (54, 56) d'un entraînement électrique (15).

10. Système (22) selon l'une quelconque des revendications précédentes, dans lequel le système (22) comprend plusieurs circuits d'attaque (48, 40), en particulier des circuits d'attaque de grille (48, 40), tels que des circuits d'attaque de grille IGBT (48, 40), pour l'activation d'au moins une soupape (42) de l'installation de frein à friction (43) et pour l'activation d'au moins un étage final (50) d'un onduleur de l'entraînement électrique (15), dans lequel les circuits d'attaque (48, 40) sont de préférence identiques.

11. Système (22) selon l'une quelconque des revendications précédentes, dans lequel l'appareil de commande (18) comprend au moins une soupape (42), de préférence au moins une électrovanne (42), de manière particulièrement préférée au moins une soupape de système anti-blocage (ABS) (42), qui peut être activée par les signaux d'activation de frein (34).

12. Système (22) selon l'une quelconque des revendications précédentes, dans lequel l'appareil de commande (18) est conçu, dans le cas d'un signal de demande d'accélération (26), qui comprend une demande d'une modification d'accélération positive (25), pour réduire une valeur de consigne de couple (33) du signal d'activation d'entraînement (32) et pour produire un signal d'activation de frein (34) avec une demande de frein pour une installation de frein à friction (43) de l'essieu moteur (14).

13. Système (22) selon l'une quelconque des revendications précédentes, dans lequel l'appareil de commande (18) comprend un dispositif anti-patinage intégré (36) et/ou un dispositif de contrôle de stabilité intégré (60), en particulier pour l'essieu moteur (14).

14. Système (22) selon l'une quelconque des revendications précédentes, dans lequel le système (22) comprend un appareil de commande de véhicule (16).

15. Système (22) selon l'une quelconque des revendications précédentes, dans lequel l'appareil de commande (18) est conçu, dans le cas d'une valeur de consigne de couple négative (33) d'un signal d'activation d'entraînement (32), pour commuter l'entraînement électrique (15) dans un mode de générateur, afin de produire, à partir de l'énergie cinétique, qui est de préférence fournie par le biais de l'essieu moteur (14), de l'énergie électrique et en particulier pour l'introduire dans l'accumulateur d'énergie (52).

16. Système (22) selon l'une quelconque des revendications précédentes, dans lequel l'appareil de commande (18) est conçu pour recevoir un signal de demande de frein de service (69), qui est produit par l'appareil de commande de véhicule (16), afin d'activer au moins une installation de frein à friction (43).

17. Système (22) selon l'une quelconque des revendications précédentes, dans lequel l'appareil de commande (18) est conçu pour activer un frein moteur (65) et/ou un retardateur (67) d'un véhicule utilitaire (10).

18. Véhicule utilitaire (10) comprenant un système (22) selon l'une quelconque des revendications 1 à 17, dans lequel le véhicule utilitaire (10) comprend au moins un essieu moteur (14) avec au moins un entraînement électrique (15), ainsi qu'au moins une installation de frein à friction (43) et de préférence un essieu non moteur (12).

19. Procédé pour exploiter un système (22) selon l'une quelconque des revendications 1 à 17, comprenant les étapes :
- de transmission (72) d'un signal de demande d'accélération (26) à un appareil de commande (18),
- de production (74) de signaux d'activation d'entraînement (32) et de signaux d'activation de frein (34) avec l'appareil de commande (18),
- d'activation (76) d'un entraînement électrique (15) avec les signaux d'activation d'entraînement (32) et
- d'activation (78) d'une installation de frein à friction (43) avec les signaux d'activation de frein (34).
